# EUROPEAN PATENT SPECIFICATION

(11) **EP 2 761 160 B1**
(45) Date of publication and mention of the grant of the patent: **04.11.2015**
(21) Application number: 12788265.2
(22) Date of filing: 14.09.2012
(51) Int. Cl.: F02M 69/04, F02M 51/06, F02M 21/02, F16K 31/06

(54) **MODULAR INJECTOR SET FOR A SYSTEM FOR FEEDING GAS FUEL TO AN INTERNAL COMBUSTION ENGINE**
MODULARER INJEKTORSATZ FÜR EIN SYSTEM ZUR ZUFÜHRUNG VON GASBRENNSTOFF ZU EINER BRENNKRAFTMASCHINE
ENSEMBLE MODULAIRE D'INJECTEUR POUR SYSTÈME D'ALIMENTATION EN COMBUSTIBLE GAZEUX D'UN MOTEUR À COMBUSTION INTERNE

(30) Priority: 14.09.2011 IT TO20110821
(43) Date of publication of application: 06.08.2014
(73) Proprietor: Matrix S.p.A., 10015 Ivrea (IT)
(72) Inventor: GAIARDO, Mario, I-10015 Ivrea (IT); BARBERO, Piercarlo, I-10015 Ivrea (IT)
(74) Representative: D'Angelo, Fabio
(86) International application number: PCT/IB2012/054824
(87) International publication number: WO 2013/038384

(56) References cited:
- WO-A1-99/18345
- WO-A1-2006/111987
- WO-A1-2010/113645
- WO-A2-2008/068578
- DE-A1-102008 055 098
- DE-U1-202010 006 187
- US-A1- 2006 060 681

## Description

### TECHNICAL FIELD

The present invention relates to an injector for a system for feeding gas fuel, e.g. GPL or methane, to an internal combustion engine.

### BACKGROUND ART

In the sector of systems for feeding gas fuel to an internal combustion engine, it is known to provide a system comprising a tank for containing a fuel in the liquefied gas state, a pressure reducer connected to the tank to reduce the fuel pressure, a feeding manifold connected to the pressure reducer, and a plurality of injectors connected in parallel to one another to the feeding manifold to selectively feed the fuel to the respective cylinders of the internal combustion engine.

The injector generally comprises a boxed body which is shaped so as to define an inlet mouth for the fuel into the injector and an outlet mouth for the fuel from said injector.

The boxed body houses therein a shutter which is mounted to be displaced between a closed position and an open position of the outlet mouth, an electromagnetic actuator to displace the shutter from the closed position thereof to the open position thereof, and an elastic thrust device to displace the shutter from the open position thereof to the closed position thereof.

The known systems for feeding gas fuel to an internal combustion engine of the above-described type are relatively costly and have a relatively low flexibility because they involve the provision and use of different types of injectors which are specifically provided as a function of the different types of feed manifolds and the different types of cylinders connected to said injectors.

WO 2008/068578 A2 discloses an injector as defined in the preamble of claim 1.

### DISCLOSURE OF INVENTION

The object of the present invention is to provide an injector for a system for feeding a gas fuel to an internal combustion engine which is free from the above-described drawbacks and simple and cost-effective to be implemented.

According to the present invention, an injector as claimed in claim 1 is provided for a system for feeding gas fuel to an internal combustion engine.

### BRIEF DESCRIPTION OF THE DRAWINGS

The present invention will now be described with reference to the accompanying drawings, which illustrate an embodiment thereof by way of non-limiting example, in which:
figure 1 is a diagrammatic, perspective view of a preferred embodiment of the injector of the present invention;
figure 2 is a diagrammatic, perspective view of the injector in figure 1 mounted in a system for feeding a gas fuel to an internal combustion engine;
figure 3 is a diagrammatic view in section, with parts removed for clarity, of a detail of figure 2;
figure 4 is a diagrammatic, perspective view of a first variation of the injector in figure 1;
figure 5 is a diagrammatic, perspective view of a second variation of the injector in figure 1; and
figure 6 is a diagrammatic view in section of the injector in figure 5.

### BEST MODE FOR CARRYING OUT THE INVENTION

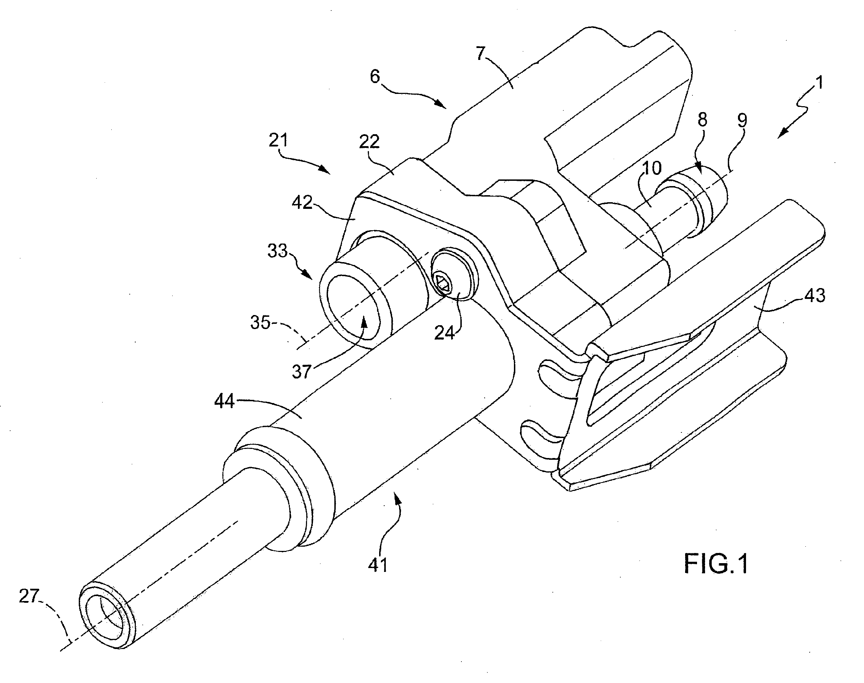

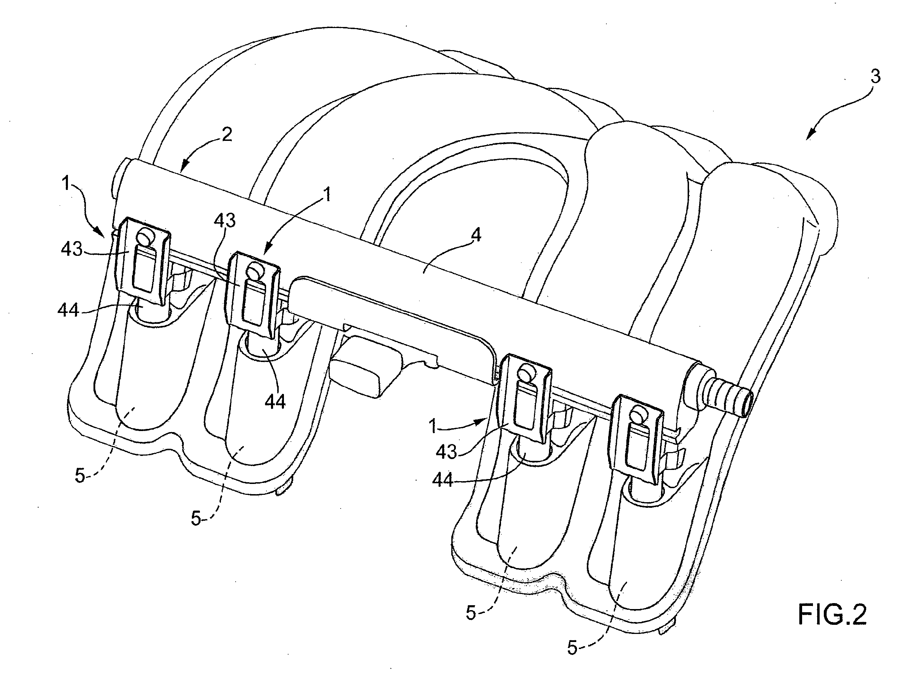

With reference to figures 1, 2, and 3, the numeral 1 indicates, as a whole, an injector used in a system 2 for feeding a gas fuel, e.g. GPL or methane, to an internal combustion engine 3.

System 2 comprises a tank (not shown) for containing a fuel in liquefied gas form, a pressure reducer (not shown) connected to the tank (not shown) to reduce the fuel pressure and determine, in the case of GPL, the passing to the gas state, a tubular feeding manifold 4 connected to the pressure reducer (not shown), and a plurality of injectors 1 connected in parallel to one another to manifold 4 to selectively feed the gas fuel to respective cylinders 5 of internal combustion engine 3.

It is appropriate to specify that in the following description, the term "cylinder" means the group of the fuel injection cylinder and the possible feeding pipe interposed between injector 1 and said injection cylinder. Each injector 1 has an inlet module 6 comprising a boxed body 7 shaped so as to define an inlet mouth 8, which has a longitudinal axis 9, and comprises an inlet segment 10 protruding within manifold 4 to allow the gas fuel to enter injector 1 and an outlet segment 11 protruding within a substantially rectangular-shaped cavity 12 obtained in the boxed body 7.

Cavity 12 opens outwards at an end face 13 of boxed body 7 which is substantially flat and perpendicular to axis 9, and is limited by a bottom wall 14 which is substantially perpendicular to axis 9 and a lateral wall 15 which is substantially parallel to said axis 9.

Cavity 12 houses therein an actuating device 16 defined by an electromagnetic actuator 17 comprising a cup-like body 18 inserted in cavity 12 so as to extend about segment 11, a core 19 made of magnetic material mounted in body 18, and a coil 20, which is wound about core 19, and is electrically fed by a known control unit (not shown).

Cavity 12 is closed by an outlet module 21 of injector 1 comprising a boxed body 22, which is limited by a substantially flat end face 23 arranged in contact with face 13, is releasably fixed to boxed body 7 by means of a pair of locking screws 24 parallel to axis 9, and has a cavity 25, which opens outwards at face 23, and faces cavity 12.

Boxed body 22 is shaped so as to define an outlet mouth 26, which has a longitudinal axis 27 parallel to axis 9, protrudes from boxed body 22 opposite face 23, and has an inlet hole 28 facing cavity 25.

Cavity 25 houses therein a shutter 29 comprising a plate 30, which is made of magnetic material, faces actuator 17, and is provided with a closing disc 31 made of elastomeric material facing hole 28.

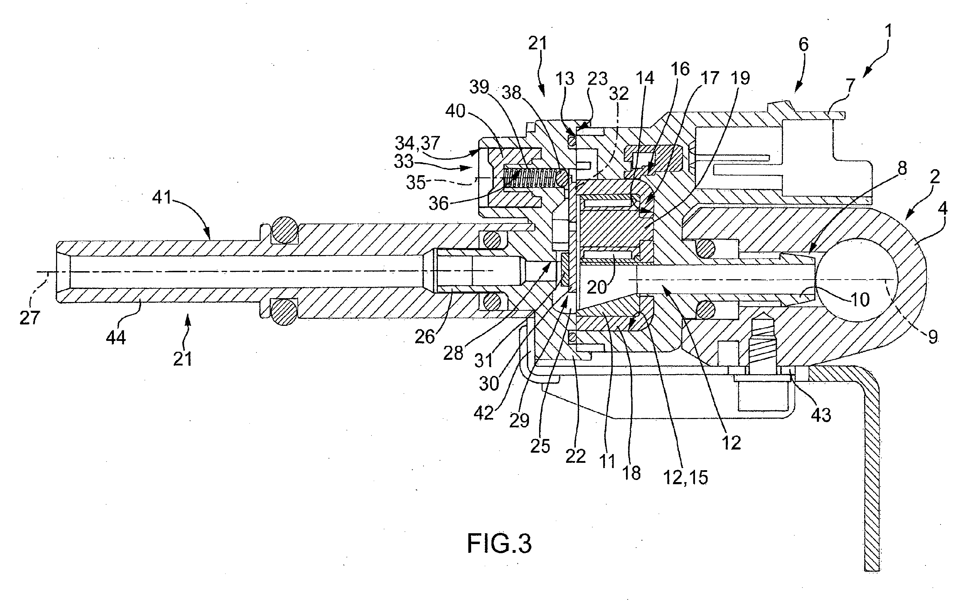

Plate 30 is mounted to rotate, with respect to boxed body 22, about a rotation axis 32 obtained on the free face of body 18 transverse to axis 9 between an open position (figure 3), in which plate 30 is arranged parallel to faces 13, 23 to allow disc 31 to disengage hole 28 and the gas fuel to flow through mouth 26 and the relative cylinder 5, and a closed position (not shown), in which plate 30 is inclined with respect to axis 9 to allow disc 31 to close hole 28 and the gas fuel to flow through mouth 26 and, therefore, the relative cylinder 5.

When the electricity feed of coil 20 is interrupted, plate 30 is displaced, and normally maintained in the closed position thereof by an elastic thrust device 33, which defines, together with actuating device 16 and shutter 29, a valve adapted to selectively control the feeding of gas fuel to the relative cylinder 5.

Device 33 is housed in outlet module 21, and comprises a through hole 34, which is obtained through boxed body 22, has a longitudinal axis 35 which is parallel to axis 9, and comprises a narrowed portion 36 and a widened portion 37 which are substantially coaxial to one another.

Portion 36 houses therein a bar 38 made of elastomeric material, which is arranged with a longitudinal axis thereof parallel to axis 32, and is maintained in contact with an end of plate 30 by a spring 39, which is mounted within portion 36 coaxially to axis 35, and is arranged between bar 38 and an adjusting nut 40 screwed into portion 37 to selectively pre-load said spring 39.

When coil 20 is electrically fed, plate 30 is displaced in the open position thereof against the action of spring 39 by actuator 17, which exerts a rotation torque on plate 30 which is opposite and in any case greater than the rotation torque exerted on plate 30 by said spring 39.

The outlet module 21 further comprises a coupling block 41 of injector 1 with manifold 4 and with the relative cylinder 5.

Block 41 comprises a plate 42, which is arranged perpendicularly to axis 9, is releasably fixed to boxed body 22 by means of the screws 24, and is bent according to an angle of substantially 90° so as to define a hooking bracket 43 of injector 1 to manifold 4.

Plate 42 is further provided with a coupling joint 44, which extends coaxially to axis 27, is fluid-tightly coupled with mouth 26, and protrudes from plate 42 opposite boxed body 22 to be fluid-tightly coupled within the relative cylinder 5.

With regard to what is described above, it is appropriate to specify that outlet module 21 is provided with at least two interchangeable coupling blocks 41, which are releasably fixed to boxed body 22 by means of the screws 24, and differ from one another due to different diameters and/or lengths of the joints 44.

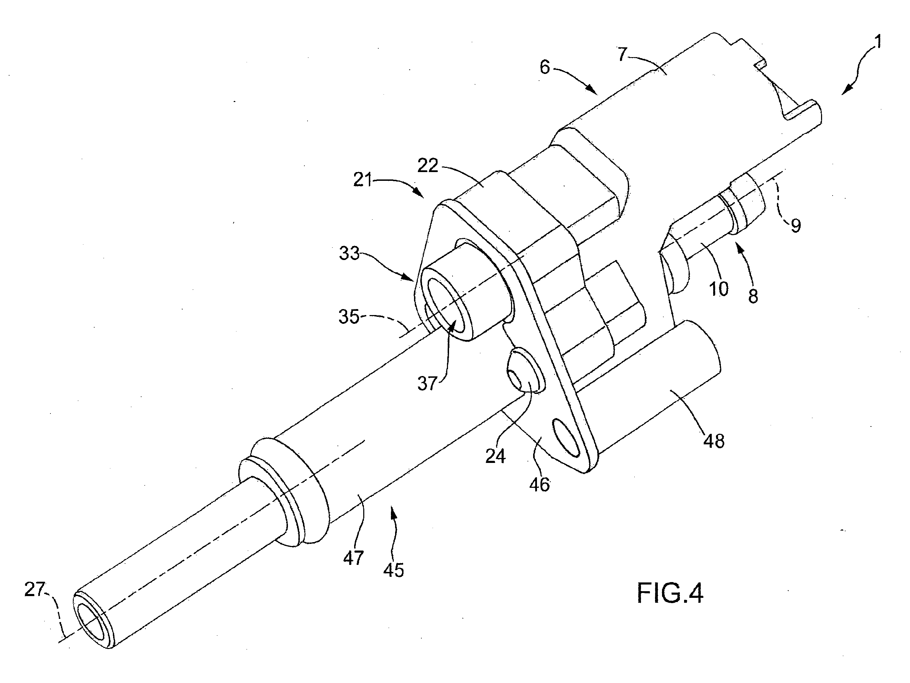

The variation in figure 4 differs from what is shown in the preceding figures solely in that block 41 is eliminated and replaced with a coupling block 45 comprising a plate 46, which is arranged perpendicularly to axis 9, is releasably fixed to boxed body 22 by means of the screws 24, and is provided with a coupling joint 47 which is completely like joint 44.

Block 45 is hooked to manifold 4 by means of two bushes 48 which are parallel to one another, which protrude from plate 46 opposite joint 7 and the two boxed bodies 7, 22, extend parallel to axis 9, and are engaged by respective fixing members (not shown) adapted to releasably lock block 45 on manifold 4.

Also in this case, the outlet module 21 is provided with at least two interchangeable coupling blocks 45, which are releasably fixed to the boxed body 22 by means of the screws 24, and differ from one another due to different diameters and/or lengths of the joints 47 and/or the bushes 48.

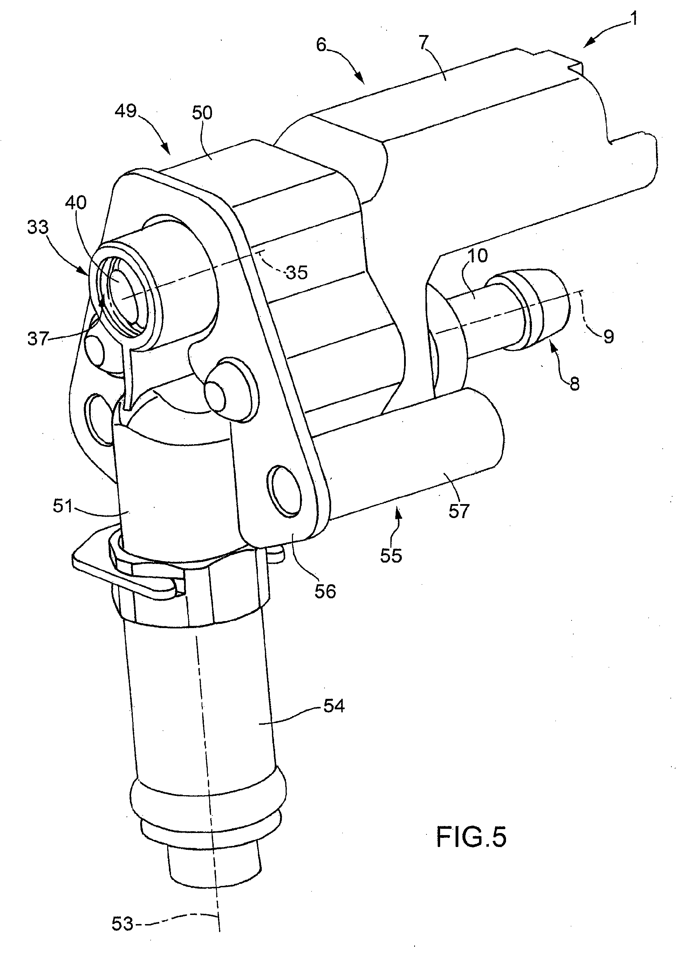

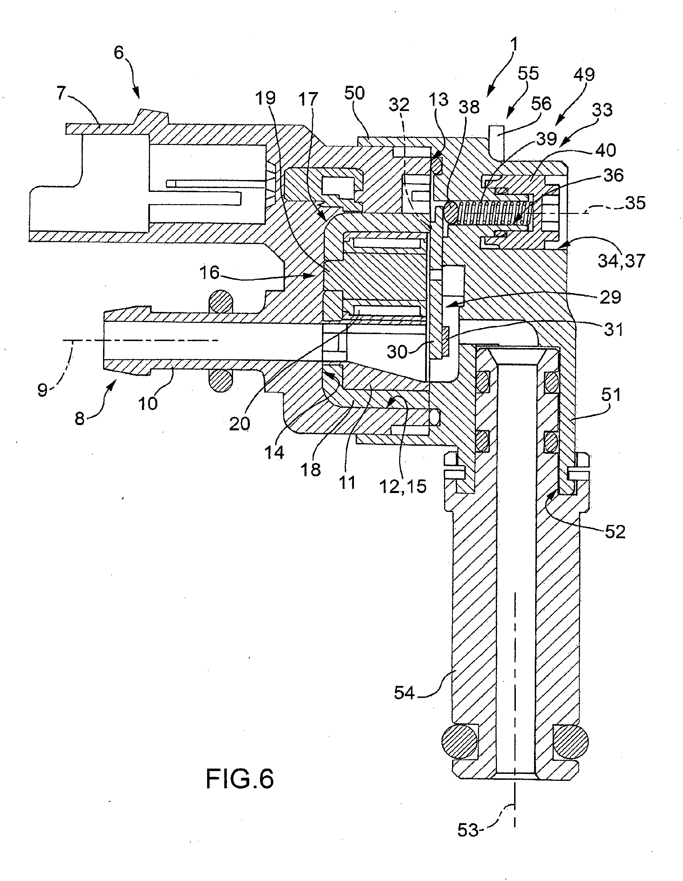

The variation in figures 5 and 6 differs from what is shown in the preceding figures in that outlet module 21 is eliminated and replaced with an outlet module 49 comprising a boxed body 50, which is like the boxed body 22, and differs from the latter in that it has an outlet mouth 51 comprising an outlet segment 52 having a longitudinal axis 53 transversal to axis 9.

The outlet module 49 is further provided with a plurality of interchangeable coupling joints 54 adapted to be fluid-tightly coupled with segment 53 and allow the coupling of injector 1 with the relative cylinder 5, and has a plurality of interchangeable coupling blocks 55, which are releasably fixed to the boxed body 22 by means of the screws 24, and each comprise a respective plate 56 like plate 46 and a respective pair of bushes 57, which are like the bushes 48, and differ from the bushes 57 of the other blocks 55 due to diameter and/or length.

From what is described above, it follows that the interchangeability of the different outlet modules 21 and 49, the different coupling blocks 41, the different coupling blocks 45, the different coupling joints 54, and the different coupling blocks 55 allows different configurations of injector 1 with the same inlet module 6, and therefore allows to at least partly standardize the components of injector 1, reduce the production costs of injector 1, and increase the flexibility of said injector 1.

## Claims

1. A modular injector set with an injector and interchangeable outlet modules for a system (2) for feeding gas fuel to an internal combustion engine (3), the modular injector set comprising an inlet mouth (8) for the fuel into the injector; an outlet mouth (26; 51) of the fuel from the injector; and a valve device, which is arranged between the inlet mouth (8) and the outlet mouth (26; 51), and comprises, in turn, a shutter (29), a first actuating device (16) to displace the shutter (29) in an open position, in which the inlet mouth (8) and the outlet mouth (26; 51) are connected to one another to allow the feeding of fuel to the outlet mouth (26; 51), and a second actuating device (33) to displace the shutter (29) in a closed position, in which the inlet mouth (8) and the outlet mouth (26; 51) are separate from one another to prevent the feeding of the fuel to the outlet mouth (26; 51); the modular injector set also comprising an inlet module (6) provided with the inlet mouth (8) and with the first actuating device (16); the set comprising at least two interchangeable outlet modules (21; 49), each of which is provided with said relative outlet mouth (26; 51), with said relative shutter (29), and with said relative second actuating device (33); and locking means (24) to releasably lock the outlet modules (21; 49) on the inlet module (6);
**characterized in that** the inlet mouth (8) has a first longitudinal axis (9), **in that** the outlet mouth (51) of the first said outlet module (49) has, at least at an outlet segment (52) thereof, a second longitudinal axis (53) transversal to the first axis (9), and **in that** the outlet mouth (26) of a second said outlet module (21) has a third longitudinal axis (27) parallel to the first axis (9).

2. The set according to claim 1, wherein the inlet module (6) comprises a first boxed body (7), which has the inlet mouth (8), and houses therein the first actuating device (16), and wherein each outlet module (21; 49) comprises a second boxed body (22; 50), which has the relative outlet mouth (26; 51), houses therein the relative shutter (29) and the relative second actuating device (33), and is releasably locked on the first boxed body (7).

3. The set according to claim 2, wherein at least one of the outlet modules (21; 49) also comprises at least two interchangeable hooking blocks (41; 45; 55), each of which is adapted to be releasably fixed to the second boxed body (22; 50), and allows the hooking of the injector to a manifold (4) feeding fuel to the inlet mouths (8) of a plurality of injectors.

4. The set according to claim 3, wherein each hooking block (41; 45; 55) comprises a fastening plate (42; 46; 56) releasably fixed to the second boxed body (22; 50) perpendicularly to a longitudinal axis (9) of the inlet mouth (8).

5. The set according to claim 4, wherein the hooking block (45; 55) has a pair of bushes (48; 57), which protrude from the fastening plate (46; 56) parallel to the longitudinal axis (9) of the inlet mouth (8) to allow the hooking of the injector to the feeding manifold (4).

6. The set according to claim 4, wherein the fastening plate (42) is substantially L-shaped to define a hooking bracket (43) of the injector to the feeding manifold (4).

7. The set according to any of claims 2 to 6; wherein at least one of the outlet modules (21; 49) also comprises at least two interchangeable coupling joints (44; 47; 54), each of which is adapted to be releasably fixed to the second boxed body (22; 50) coaxially to the outlet mouth (26; 51) to couple the injector with a cylinder (5) of said internal combustion engine (3).

8. The set according to claim 7, wherein the coupling joints (44; 47; 54) have lengths and/or diameters which differ from one another.

9. The set according to claim 7 or 8, wherein the coupling joints (44; 47) protrude from the fastening plate (42; 46) parallel to a longitudinal axis (27) of the outlet mouth (26).

10. The set according to any of the preceding claims, wherein the first actuating device (16) comprises an electromagnetic actuator (17) housed in the inlet module (6) to displace the shutter (29) from its open position to its closed position and wherein the second actuating device (33) comprises an elastic thrust system (38, 39) housed in the relative outlet module (21; 49) to displace the shutter (29) from its open position to its closed position.

## Patentansprüche

1. Eine modulare Einspritzeinrichtungs-Baugruppe mit einer Einspritzeinrichtung und austauschbaren Auslassmodulen für ein System zum Zuführen von gasförmigem Kraftstoff zu einer Brennkraftmaschine (3), wobei die modulare Einspritzeinrichtungsbaugruppe eine Einlassöffnung (8) für den Kraftstoff in die Einspritzeinrichtung, eine Auslassöffnung (26; 51) des Kraftstoffs aus der Einspritzeinrichtung und eine Ventilvorrichtung aufweist, die zwischen der Einlassöffnung (8) und der Auslassöffnung (26; 51) angeordnet ist und in der Reihenfolge aufweist: einen Schieber (29), eine erste Betätigungseinrichtung (16) zum Verschieben des Schiebers (29) in eine offene Position, in der die Einlassöffnung (8) und die Auslassöffnung (26; 51) miteinander verbunden sind, um das Zuführen des Kraftstoffs zu der Auslassöffnung (26; 51) zu gestatten, und eine zweite Betätigungseinrichtung (33) zum Verschieben des Schiebers in eine geschlossene Position, in der die Einlassöffnung (8) und die Auslassöffnung (26; 51) voneinander getrennt sind, um das Zuführen von Kraftstoff zu der Auslassöffnung (26; 51) zu verhindern, wobei die modulare Einspritzeinrichtungsbaugruppe ebenfalls ein Einlassmodul (6) aufweist, das mit der Einlassöffnung (6) und mit der ersten Betätigungseinrichtung (16) versehen ist, wobei die Baugruppe zumindest zwei austauschbare Auslassmodule (21; 49), wobei jeder von diesen mit der relativen Auslassöffnung (26; 51), mit dem relativen Schieber (29) und mit der relativen zweiten Betätigungseinrichtung (33) versehen ist, und eine Verriegelungseinrichtung (24) aufweist, um die Auslassmodule (21; 49) an dem Einlassmodul (6) freigebbar zu verriegeln,
**dadurch gekennzeichnet, dass** die Einlassöffnung (8) eine erste Längsachse (9) hat, dass die Auslassöffnung (51) des ersten Auslassmoduls (49) zumindest an einem Auslasssegment (52) von diesem eine zweite Längsachse (53) quer zur ersten Achse (9) hat und dass die Auslassöffnung (26) eines zweiten Auslassmoduls (21) eine dritte Längsachse (27) parallel zur ersten Achse (9) hat.

2. Die Baugruppe nach Anspruch 1, wobei das Einlassmodul (6) einen ersten gekapselten Körper (7) aufweist, der die Einlassöffnung (8) hat und in dem die erste `Betätigungseinrichtung (16) untergebracht ist, und wobei jedes Auslassmodul (21; 49) einen zweiten gekapselten Körper (22; 50) aufweist, der die relative Auslassöffnung (26; 51) hat, in dem der relative Schieber (29) und die relative zweite Betätigungseinrichtung (33) untergebracht sind, und an dem ersten gekapselten Körper (7) freigebbar verriegelt ist.

3. Die Baugruppe nach Anspruch 2, wobei zumindest eines der Auslassmodule (21; 49) ebenfalls zumindest zwei austauschbare Einhakblöcke (41; 45; 55) aufweist von denen jeder angepasst ist, an dem zweiten gekapselten Körper (22; 50) freigebbar befestigt zu sein, und das Einhaken der Einspritzeinrichtung an einer Sammelleitung (4), die Kraftstoff zu den Einlassöffnungen (8) einer Vielzahl von Einspritzeinrichtungen führt, gestattet.

4. Die Baugruppe nach Anspruch 3, wobei jeder Einhakblock (41; 45; 55) eine Befestigungsplatte (42; 46; 56) aufweist, die an dem zweiten gekapselten Körper (22; 50) senkrecht zu einer Längsachse (9) der Einlassöffnung (8) freigebbar befestigt ist.

5. Die Baugruppe nach Anspruch 4, wobei der Einhakblock (45; 55) ein Paar von Buchsen (48; 57) hat, die von der Befestigungsplatte (46; 56) parallel zur Längsachse (9) der Einlassöffnung (8) vorstehen, um das Einhaken der Einspritzeinrichtung an der Zuführ-Sammelleitung (4) zu gestatten.

6. Die Baugruppe nach Anspruch 4, wobei die Befestigungsplatte im Wesentlichen L-förmig ist, um eine Einhak-Halterung (43) der Einspritzeinrichtung an der Zuführ-Sammelleitung (4) zu definieren.

7. Die Baugruppe nach einem der Ansprüche 2 bis 6, wobei zumindest eines der Auslassmodule (21; 49) ebenfalls zumindest zwei austauschbare Kopplungsverbindungen (44; 47; 54) aufweist, von denen jede angepasst ist, an dem zweiten gekapselten Körper (22; 50) koaxial zu der Auslassöffnung (26; 51) freigebbar befestigt zu sein, um die Einspritzeinrichtung mit einem Zylinder (5) der Brennkraftmaschine (3) zu koppeln.

8. Die Baugruppe nach Anspruch 7, wobei die Kopplungsverbindungen (44; 47; 54) Längen und/oder Durchmesser haben, die voneinander verschieden sind.

9. Die Baugruppe nach Anspruch 7 oder 8, wobei die Kopplungsverbindungen (44; 47) von der Befestigungsplatte (42; 46) parallel zur Längsachse (27) der Auslassöffnung (26) vorstehen.

10. Die Baugruppe nach einem der vorhergehenden Ansprüche, wobei die erste Betätigungseinrichtung (16) eine elektromagnetische Betätigungseinrichtung (17) aufweist, die in dem Einlassmodul (6) untergebracht ist, um den Schieber (29) von seiner offenen Position zu seiner geschlossenen Position zu verschieben, und wobei die zweite Betätigungseinrichtung (33) ein elastische Schubsystem (38, 39) aufweist, das in dem relativen Auslassmodul (21; 49) untergebracht ist, um den Schieber (29) von seiner offenen Position zu seiner geschlossenen Position zu verschieben.

## Revendications

1. Ensemble d'injecteur modulaire comportant un injecteur et des modules de sortie interchangeables pour un système (2) d'alimentation en carburant gazeux d'un moteur à combustion interne (3), l'ensemble d'injecteur modulaire comprenant une embouchure d'admission (8) du carburant dans l'injecteur ; une embouchure de sortie (26 ; 51) du carburant depuis l'injecteur ; et un dispositif de soupape, qui est agencé entre l'embouchure d'admission (8) et l'embouchure de sortie (26 ; 51), et comprend, quant à elle, un clapet (29), un premier dispositif d'actionnement (16) destiné à déplacer le clapet (29) vers une position ouverte, dans laquelle l'embouchure d'admission (8) et l'embouchure de sortie (26 ; 51) sont raccordées l'une à l'autre pour permettre l'alimentation en carburant de l'embouchure de refoulement (26 ; 51), et un second dispositif d'actionnement (33) destiné à déplacer le clapet (29) vers une position fermée, dans laquelle l'embouchure d'admission (8) et l'embouchure de sortie (26 ; 51) sont séparées l'une de l'autre pour empêcher l'alimentation en carburant de l'embouchure de sortie (26 ; 51) ; l'ensemble d'injecteur modulaire comprenant en outre un module d'admission (6) incluant l'embouchure d'admission (8) et le premier dispositif d'actionnement (16) ; l'ensemble comprenant au moins deux modules de sortie interchangeables (21 ; 49), chacun desquels est muni d'une embouchure de sortie associée (26 ; 51), dotée dudit clapet associé (29), et doté dudit second dispositif d'actionnement (33) ; et un moyen de verrouillage (24) destiné à verrouiller de façon libérable les modules de sortie (21 ; 49) sur le module d'admission (6) ;
**caractérisé en ce que** l'embouchure d'admission (8) a un premier axe longitudinal (9), **en ce que** l'embouchure de sortie (51) du premier dit module de sortie (49) a, au moins au niveau d'un segment de sortie (52) de celui-ci, un deuxième axe longitudinal (53) transversal au premier axe (9), et **en ce que** l'embouchure de sortie (26) d'un second dit module de refoulement (21) a un troisième axe longitudinal (27) parallèle au premier axe (9).

2. Ensemble selon la revendication 1, dans lequel le module d'admission (6) comprend un premier corps caissonné (7), qui comporte la première embouchure de sortie (8), et y loge le premier dispositif d'actionnement (16), et dans lequel chaque module de sortie (21 ; 49) comporte un second corps caissonné (22 ; 50), qui comprend l'embouchure de sortie associée (26 ; 51), y loge le clapet associé (29) et le second dispositif d'actionnement associé (33), et est verrouillé de façon libérable sur le premier corps caissonné (7).

3. Ensemble selon la revendication 2, dans lequel au moins l'un des modules de refoulement (21 ; 49) comprend également au moins deux blocs d'accrochage interchangeables (41 ; 45 ; 55), chacun desquels est adapté pour être fixé de façon libérable au second corps caissonné (22 ; 50), et permet l'accrochage de l'injecteur sur un collecteur (4) alimentant en carburant les embouchures d'admission (8) d'une pluralité d'injecteurs.

4. Ensemble selon la revendication 3, dans lequel chaque bloc d'accrochage (41 ; 45 ; 55) comprend une plaque de solidarisation (42 ; 46 ; 56) fixée de façon libérable au second corps caissonné (22 ; 50) perpendiculaire à un axe longitudinal (9) de l'embouchure d'admission (8).

5. Ensemble selon la revendication 4, dans lequel le bloc de verrouillage (45 ; 55) a une paire de douilles (48 ; 57), qui font saillie à partir de la plaque de solidarisation (46 ; 56) parallèlement à l'axe longitudinal (9) de l'embouchure d'admission (8) pour permettre l'accrochage de l'injecteur au collecteur d'alimentation (4).

6. Ensemble selon la revendication 4, dans lequel la plaque de solidarisation (42) est sensiblement en forme de L pour définir un support accrochage (43) de l'injecteur au collecteur d'alimentation (4).

7. Ensemble selon l'une quelconque des revendications 2 à 6, dans lequel au moins l'un des modules de sortie (21 ; 49) comprend également au moins deux joints de couplage (44 ; 47 ; 54), chacun desquels est adapté pour être fixé de façon libérable au second corps caissonné (22 ; 50) coaxialement à l'embouchure de sortie (26 ; 51) pour coupler l'injecteur à un cylindre (5) dudit moteur à combustion interne (3).

8. Ensemble selon la revendication 7, dans lequel les joints de couplage (44 ; 47 ; 54) ont des longueurs et/ou des diamètres qui diffèrent les uns des autres.

9. Ensemble selon la revendication 7 ou 8, dans lequel les joints de couplage (44 ; 47 ; 54) font saillie à partir de la plaque de solidarisation (42 ; 46) parallèlement à un axe longitudinal (27) de l'embouchure de sortie (26).

10. Ensemble selon l'une quelconque des revendications précédentes, dans lequel le premier dispositif d'actionnement (16) comprend un actionneur électromagnétique (17) logé dans le module d'admission (6) pour déplacer le clapet (29) de sa position ouverte à sa position fermée et dans lequel le second dispositif d'actionnement (33) comprend un système de poussée élastique (38, 39) logé dans le module de refoulement associé (21 ; 49) pour déplacer le clapet (29) de sa position ouverte à sa position fermée.
